Europäisches Patentamt

European Patent Office

Office européen des brevets

(11) Publication number: **0 358 818 B1**

# EUROPEAN PATENT SPECIFICATION

(45) Date of publication of patent specification: **22.04.92**   (51) Int. Cl.⁵: **G01N 21/47**, G01B 11/30

(21) Application number: **88308419.6**

(22) Date of filing: **12.09.88**

(54) **Reflective photometry instrument.**

(43) Date of publication of application:
**21.03.90 Bulletin 90/12**

(45) Publication of the grant of the patent:
**22.04.92 Bulletin 92/17**

(84) Designated Contracting States:
**DE FR GB SE**

(56) References cited:
**EP-A- 0 154 875
DE-A- 1 937 503
DE-A- 2 553 536
FR-A- 2 131 055
FR-A- 2 491 615**

**PATENT ABSTRACTS OF JAPAN, vol. 12, no. 95 (P-681)[2942], 29th March 1988; & JP-A-62 228 143**

**PATENT ABSTRACTS OF JAPAN, vol. 12, no. 79 (P-676)[2926], 12th March 1988; & JP-A-62 217 144**

(73) Proprietor: **Golberstein, Moshe
2100 Drew Avenue South
Minneapolis Minnesota 55416(US)**

(72) Inventor: **Golberstein, Moshe
2100 Drew Avenue South
Minneapolis Minnesota 55416(US)**

(74) Representative: **Powell, Stephen David et al
WILLIAMS, POWELL & ASSOCIATES 34
Tavistock Street
London WC2E 7PB(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# Description

Of the many instruments proposed for measuring surface reflectance optically, none are completely satisfactory with respect to cost, size, portability and accuracy. Most, if not all, prior instruments require an optical system that includes many lenses and other costly components such as half-silvered mirrors and special alignment schemes which increase cost, size, bulk and reduce portability.

DE-OS-1 937 503 (SIEMENS AG) discloses an instrument for measuring reflectance of a specimen comprising a light source, a first photosensitive surface in an optical relationship with the light source to receive impinging rays from the said light source, a second photosensitive surface positioned relative to the light source and positionable with respect to a specimen to receive rays reflected from the specimen, supporting means to establish the distance between, a) the light source and the first photosensitive surface, b) the light source and the specimen, and c) the specimen and the second photosensitive surface, and circuit means connected to receive photosensitive surface output signals, the first and the second photosensitive surfaces being positioned adjacent to one another in a back-to-back relationship to form a sandwich structure and the sandwich structure having a passage therethrough allowing a portion of the rays from the light source to pass both photosensitive surfaces without impingement thereupon and thereafter strike the specimen.

This disclosure corresponds to the introductory part of claim 1.

According to the present invention there is provided an instrument for measuring reflectance of a specimen comprising a light source, a first photosensitive surface in an optical relationship with the light source to receive impinging rays from the said light source, a second photosensitive surface positioned relative to the light source and positionable with respect to a specimen to receive rays reflected from the specimen, supporting means to establish the distance between, a) the light source and the first photosensitive surface, b) the light source and the specimen, and c) the specimen and the second photosensitive surface, and circuit means connected to receive photosensitive surface output signals, the first and the second photosensitive surfaces being positioned adjacent to one another in a back-to-back relationship to form a sandwich structure and the sandwich structure having a passage therethrough allowing a portion of the rays from the light source to pass both photosensitive surfaces without impingement thereupon and thereafter strike the specimen, characterised in that each of the first and second photosensitive surfaces comprises a plurality of photosensitive elements distributed about the optical axis passing from the light source to the photosensitive surfaces, first conductor means connecting each of the elements of the first photosensitive surface to the circuit means and second conductor means connecting each of the elements of the second photosensitive surface to the circuit means, the circuit means determining, from the photosensitive element output signals, values representing the reflectance of the specimen and the axial orientation of the instrument with respect to the specimen.

Preferred embodiments of the present invention will now be described by way of example only, with reference to the accompanying drawings, of which:

Figure 1 is a diagrammatic view, in perspective, of a first embodiment of the invention;

Figure 2 is a schematic diagram of circuitry employed in connection with the embodiment shown in Figure 1; and

Figure 3 is a side elevational view, partly broken away, of another embodiment of the invention.

The operation of the instrument is based upon relative reflectivity, namely on a known value of reflectivity of many types of specimens. Based on this knowledge of reflectivity, the invention utilizes the relative optical power incident to a first photosensitive surface from a light source and that reflected onto a second photosensitive surface from the specimen. While the instrument can be employed for a variety of uses, typical applications include, but are not limited,to the surfaces of metals.

In its preferred form, the invention eliminates the need for many lenses, reduces complexity and alignment requirements but still provides accurate surface reflectance information. Thus, it makes possible a cost effective alternative to presently available surface reflectance instruments.

The present invention is based upon the concept that a light source whether or not focused or collimated is picked up by two photosensors, one exposed directly to the light from the source and the other exposed indirectly after being reflected from the test specimen. The specimen is illuminated through holes present in the center of the photosensors. If the beam of light is relatively narrow, all or virtually all of the light reflected from the specimen under test will be scattered back onto the photosensor, this photonic energy scattered onto the photosensor is representative of the surface reflectance of the specimen under test. If it is known that a certain specimen when subjected to a particular industrial process, yields a certain quantity of surface reflectance, and if the specimen is illuminated with a known light source which is positioned at a known angular relationship to the specimen, the specimen will reflect a quantity of light X. This quantity of light x, which is optical power, is a reference figure for calibrating the instrument. Accordingly, from two signals, a) one derived from a reference photosensor and b) a second from a photosensor that receives scattered light from the specimen positioned at a known relationship to the light source, the relative surface reflectance is determined.

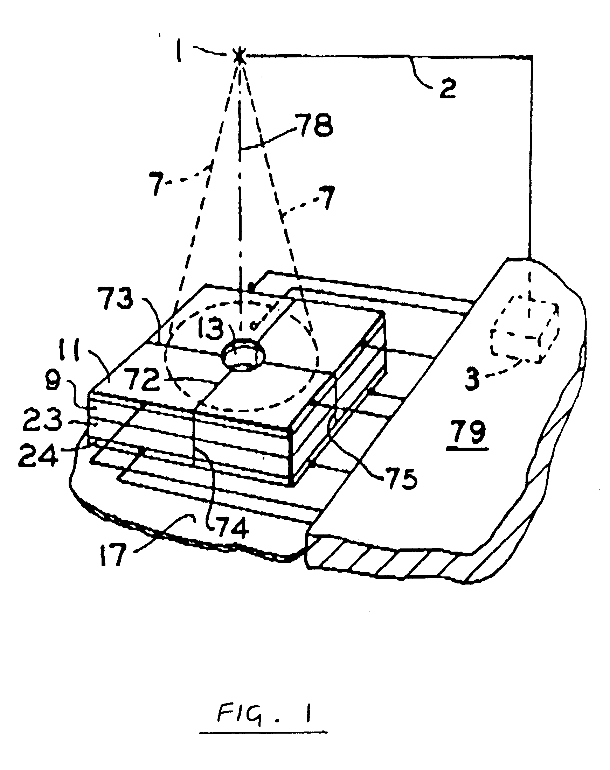

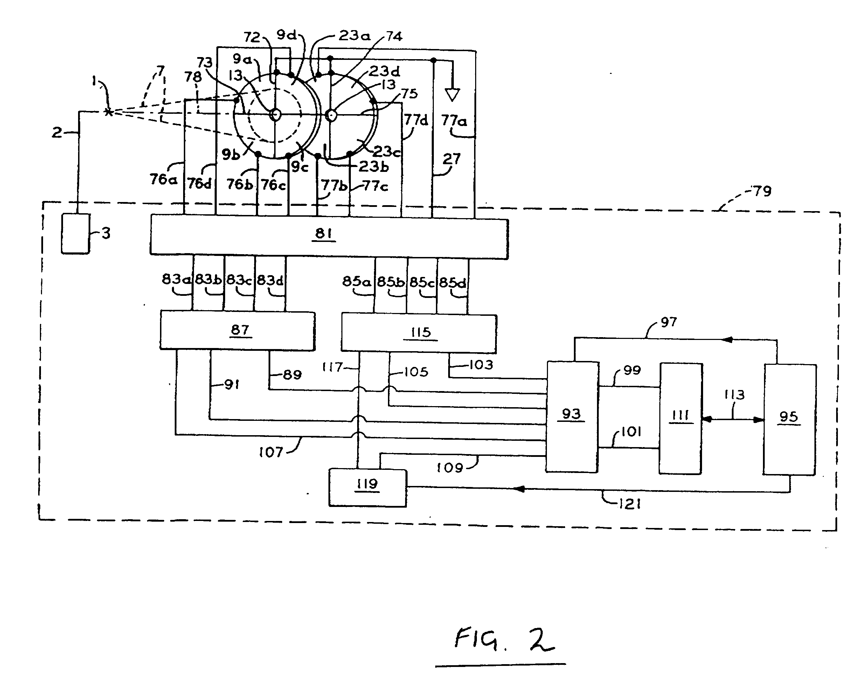

Refer now to Figure 1, which illustrates the first embodiment of the invention. Light is provided by light source 1, such as an LED, laser diode or any other convenient source of light. The particular type of light source should be compatible with the specimen 17 under study as will be apparent to those skilled in the art. The light source 1 is connected by means of conductors 2 to any suitable power source that is included in signal conditioning circuit 79. Between the light source 1 and the specimen 17 is a pair of photosensors 9 and 23 mounted back-to-back with photosensitive surfaces 11 and 24 respectively facing the source of light 1 and the photosensitive surface 24 facing the specimen. Each photosensor is made out of four photodiode segments 9a-9d, 23a-23d that are arranged around the optical axis 78 of the instrument. A light aperture 13 which is common to photosensors 9 and 23, in this case substantially at the center, is aligned axially with the light source 1. The light source 1 thus projects a light beam depicted by envelope 7 illuminating the phototsensitive surface 11 of the photosensor 9 over a defined area. The photosensor 9 intercepts the light envelope and serves as a reference photosensor. The elements of the reference photosensor 9 are connected to signal conditioning hardware 79. Light aperture 13 at the center of the reference photosensor 9 and photosensor 23 allows the transmission of light within a smaller envelope to pass through both photosensors to the surface of the specimen 17 under test. The light from the envelope is scattered from the surface of specimen 17 under test onto the photosensitive surface 24 of the photosensor 23. The elements of photosensor 23 are connected to the signal conditioning circuit 79. Through the use of suitable signal conditioning circuits depicted in Figure 2, the information concerning the surface reflectance of the specimen 17 under test is derived. It will be noticed that photosensors 9 and 23 are held in close physical contact with one another and hence are always at the same temperature to assure accuracy and reproducibility of results.

Refer now to Figure 2 that describes details of signal conditioning hardware 79 of Figure 1. In the apparatus shown in Figure 2, the surface reflectance of the specimen 17 is compared to a reference surface (not shown) having a known surface reflectance producing a specific scatter characteristic when illuminated with the light source 1 located in the same relationship to the reference surface as it would be located in the relationship to the surface of the specimen 17. Each photosensor 9, 23 comprises four silicon photodiodes 9a-9d, 23a-23d that are sensitive to the optical power projected from the light source 1. The photodiodes are chosen for their responsivity to the light source 1. The photodiodes are in a heat conductive relationship but are insulated from one another electrically by means of at least one insulating layer. The photosensors 9 and 23 are shown separated for for illustration purposes only.

Signals 76a, 76b, 76c, 76d, 77a, 77b, 77c and 77d, are fed into an amplifier circuit 81 that amplifies the signals produced by the photodiodes comprising photosensors 9 and 23. The circuit 81 contains eight amplifiers producing amplified signals 83a-83d, 85a-85d. The magnitude of the amplified signals is a function of the photonic energy scattered from the surface of specimen 17 or the reference surface, and the optical power projected through aperture 13, depending whether the instrument is being used in calibration or measurement mode. Other connections to the signal conditioning hardware 79 include a common ground line 27 and lines 2 to supply current to light source 1.

Signals 83a, 83b, 83c and 83d are fed into circuit 87 producing two outputs 89 and 91. The output 89 corresponds to the relationship produced by the sum of signals 83b and 83d, minus the sum of the signals 83a and 83c. This relationship of amplified optical power intercepted by photosensor 9 in one measure of the light source 1 alignment with the axis of the aperture 13. Signal 91 corresponds to the sum of signals 83a, 83b, 83c, and 83d. Means for implementation of such summing functions are known to those skilled in the art.

Signals 89 and 91 are fed into circuit 93 which can switch different inputs based on commands from an operator or from a programmable circuit 95. The control of the programmable circuit 95 is indicated by signal line 97. Therefore, the signal line 97 will allow the circuit 93 to produce two outputs 99 and 101 which will correspond to these signals 89 and 91, or 103 and 105, or 107 and 109. Signals 99 and 101 which according to the sequence of operations performed by the instrument will represent signals 89 and 91, are connected to a divider circuit that produces a ratio between signals 89 and 91. This ratio signal 113 will correspond to the angular orientation, i.e., the degree of alignment between light source 1, aperture 13 and photosensors 9 and 23. The ratio signal is fed to the operator or a programmable device 95.

A correction to the alignment of the light source 1 to aperture 13 can be implemented mechanically, or mathematically by the operator or the programmable circuit 95. At the particular part of the sequence in which signal 113 represents the ratio between signals 89 and 91, where 89 is the numerator and 91 is the denominator, the signal 113 is largely independent of the optical power produced by the light source 1. Signals 85a, 85b, 85c, and 85d which represent optical power scattered from surface 17, or reference surface (not shown in the figure), are connected to the signal conditioning circuit 115 which, like circuit 87 produces two output signals. The signal 103 corresponds to the sum of signals 85b and 85d minus the sum of the signals 85a and 85a. Signal 105 represents the sum of signals 85a, 85b, 85c, and 85d. Signals 103 and 105 are connected to a circuit 93 which in the proper sequence of steps to operate the instrument, will feed these signals on lines 99 and 101 correspondingly to the ration circuit 111 which is in turn connected to a programmable circuit or operator simply labelled 95. This ratio is largely independent of variations of optical power projected by the light source, and it will indicate the alignment angle between the instrument and the surface 17 or the reference surface. If the photosensor 9 and 23, the aperture 13 and the light source are perfectly aligned along the symmetry axis, the signals 83a, 83b, 83c and 83d will be essentially equal to each other, otherwise the ratio between signals 89 and signal 91 will represent a reference alignment error. This means that if a surface were illuminated perpendicularly through the aperture 13, the axis of the instrument will be tilted by the alignment error, which in turn will affect the scatter characteristic of optical power reflected from the surface 17 or a reference surface. Therefore it will be also necessary to correct for the reflected scatter characteristic as intercepted by photosensor 23. This is done by providing a mathematical correction with the programmable circuit 95 or other mechanical means.

Based on the signals 83a, 83b, 83c and 83d, circuit 87 also produces an output 107 that is proportional to the average power intercepted by the reference photosensor 9. Based on signals 85a, 85b, 85c and 85d, circuit 115 produces signal 117 which is proportional to the average optical power intercepted by photosensor 23. Signal 117 is fed to circuit 119 which provides alignment corrections if needed from programmable circuit 95. The correction signal 121 is based on the angular alignment between photosensor 23 and the surface of speciment 17 or the reference surface, and the alignment error, if any, between light source 1 and photosensor 9. The output of circuit 119 is signal 109. Signals 109 and 107 are fed via switching network 93 and the ratio circuit 111 to the programmable circuit 95. The resultant ratio of the signals 109 and 107 will represent the surface reflectance of specimen 17. This ratio will be largely independent of variations of optical power projected from the light source 1. At first, one will use the reference surface at a known geometrical orientation to the instrument. The instrument is calibrated by storing the different alignment characteristics described above by the programmable circuit 95 which will equalize output signal 107 to the signal 109 (e.g., by use of memory in the programmable circuit 95 and signal 121). Thus the resultant ratio between signals 107 and 109 will be unity. If one exchanges the reference surface with specimen 17 which was made of the same material and in the same manner as the reference, the ratio of the signal 109 over 107 will indicate the reflectance characteristic of the specimen.

A number of modifications can be made to the embodiment shown in Figures 1 and 2. The signal conditioning hardware 79 can be connected to a display or other audible or visible indicator providing the user with alarms or information indicative of acceptable surface reflectance conditions based on operator's criteria.

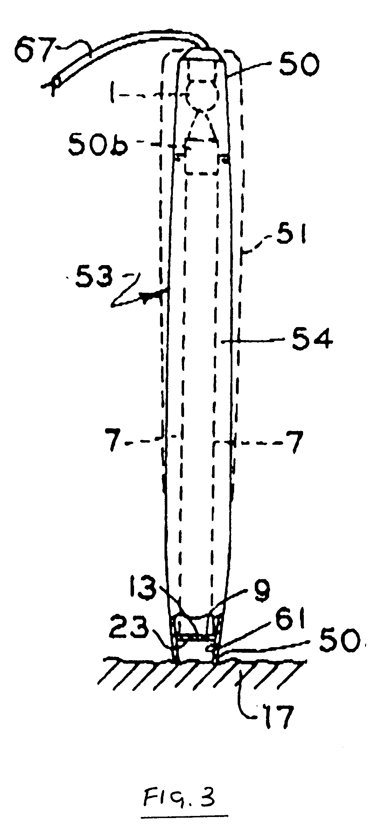

Refer now to Figure 3 which illustrates instrument 53 which may be a hand-held instrument in accordance with the present invention generally similar in shape and size to a fountain pen. The same numerals refer to corresponding parts already described. Conductors 2, 76, 27, and 77 pass through a cord 67. In this case the instrument 53 consists of a hollow barrel 54 having an upper end 50 supporting the light source 1. As already described the light from the light source falls onto the reference photosensor 9 within cone depicted by envelope 7. The barrel 54 of the instrument 53 is provided with an opening at its lower end surrounded by a supporting rim 50a which rests during operation on the test specimen 17. The supporting rim 50a as shown is oriented at right angles to the axis of the barrel 54 thereby orienting the axis of the light envelope 7 perpendicular to the surface of the specimen 17.

The instrument is held manually in contact with the surface 17. The supporting rim 50a can be composed of some substance such as Teflon or other material that will not contaminate or the surface 17. The internal wall 61 within the instrument below the photosensor 23 is preferably coated with nonreflective coating that will prevent higher order defractions of scattered light onto photosensor 23. The instrument 53 establishes three distances: the distance between a) the light source 1 and the first photosensor 9, b) between the light source 1 and the specimen 17 and c) between the specimen 17 and the second photosensor 23. These distances are established by structural parts of the apparatus including the barrel 54 supporting the light source 1 and photosensors 9 and 23, and the supporting rim 50a. The instrument 53 can be tilted back and forth as indicated by broken line 51 to seat the supporting rim 50a on the specimen 17.

Using the hand-held instrument one can perform a calibration or an alignment operation at a certain angular relationship to the reference or the test surface 17. The operator can tilt the instrument 53 randomly, while the programmable circuit 95 will monitor signals 103 and 105. When signals 103 and 105 will satisfy the predetermined alignment conditions, signals 109 and 107 will be fed to the programmable circuit 95. Moreover, using the hand-held instrument one can perform a calibration sequence of operations by means of commanding the programmable circuit 95 in Figure 2 to take data only at a certain orientation between the instrument 53 and the reference surface. In this case, instrument 53 will be programmed to accept signals 103 and 105 only under the same orientation conditions between surface 17 as they were obtained in relationship to the reference surface.

Besides the simplicity and accuracy, the instruments in accordance with the present invention have other advantages. There is no need for special lenses or precision ground mirrors. There is no need for a precision voltage or current reference, and the light source need not be very stable.

Moreover, the present invention provides most of the advantages of prior equipment and overcomes shortcomings thereof through a unique method of transmitting and receiving optical power. It therefore reduces the complexity of the signal processing needed to provide final results in describing surface reflectance.

The invention also provides an opportunity to use a relatively small numerical aperture that easily separates- specular and diffused reflectances, and by this means reduces the need for Coblentz spheres previously used in commercially available total integrated scatter instruments while the instrument of the present invention uses aperture, its principle of operation is substantially different from the typical total integrated scatter instrument of the prior art which in operation is directly dependent on the relationship between the wavelength of the light source and the surface reflectance.

## Claims

1. An instrument for measuring reflectance of a specimen comprising a light source (1), a first photosensitive surface (11) in an optical relationship with the light source to receive impinging rays from the said light source, a second photosensitive surface (24) positioned relative to the light source and positionable with respect to a specimen (17) to receive rays reflected from the specimen, supporting means to establish the distance between, a) the light source and the first photosensitive surface, b) the light source and the specimen, and c) the specimen and the second photosensitive surface, and circuit means (81-119) connected to receive photosensitive surface output signals, the first and the second photosensitive surfaces being positioned adjacent to one another in a back-to-back relationship to form a sandwich structure and the sandwich structure having a passage therethrough allowing a portion of the rays from the light source to pass both photosensitive surfaces without impingement thereupon and therafter strike the specimen, characterised in that each of the first and second photosensitive surfaces comprises a plurality of photosensitive elements distributed about the optical axis (78) passing from the light source to the photosensitive surfaces, first conductor means (76a-d, 83a-d)connecting each of the elements of the first photosensitive surface (11) to the circuit means and second conductor means (77a-d, 85a-d) connecting each of the elements of the second photosensitive surface to the circuit means, the circuit means determining, from the photosensitive element output signals, values representing the reflectance of the specimen and the axial orientation of the instrument with respect to the specimen.

2. An instrument according to Claim 1 wherein the first conductor means (76a-d, 83a-d) are connected to a first signal comparing circuit (87) and the second conductor means (77a-d, 85a-d) are connected to a second signal comparing circuit (115),the differences in the amount of light received by each element being detected, and the detected differences in the signal strengths received by the signal comparing circuits being supplied to means indicating the axial orientation of the instrument with respect to the specimen.

3. An instrument according to Claim 1 or 2, wherein said circuit means comprises a divider circuit (111), wherein a signal from one of the photosensitive surfaces is a numerator signal (109) and a signal from the other photosensitive surface is a denominator signal (107), said divider circuit thereby providing a resultant ratio representing the reflectance of the specimen.

4. An instrument according to any preceding claim wherein said photosensitive elements comprise pairs of photodiodes mounted in back-to-back relationship and in a heat conductive relationship to maintain them at substantially the same temperature.

5. An instrument according to any preceding claim arranged to be calibrated by measuring light scattered from a standard specimen of known composition and surface quality to provide a known reflectance, wherein said circuit means (81-119) include gain control means (95) for selectively changing the magnitude of a reflectance-indicating signal to correspond to the known surface reflectance of the test specimen to thereby calibrate the instrument.

**Revendications**

1. Appareil pour mesurer la réflectance d'un échantillon comprenant une source lumineuse (1), une première surface photosensible (11) en relation optique avec la source lumineuse pour recevoir des rayons incidents venant de la source lumineuse, une seconde surface photosensible (24) disposée relativement à la source lumineuse et susceptible d'être disposée par rapport à un échantillon (17) pour recevoir des rayons réfléchis par l'échantillon, des moyens de support pour définir la distance entre : a) la source lumineuse et la première surface photosensible, b) la source lumineuse et l'échantillon et c) l'échantillon et la seconde surface photosensible, et des circuits (81-119) connectés pour recevoir les signaux de sortie des surfaces photosensibles, les première et seconde surfaces photosensibles étant positionnées côte à côte et dos à dos pour former une structure en sandwich et la structure en sandwich étant traversée par un passage qui laisse passer une partie des rayons venant de la source lumineuse vers les deux surfaces photosensibles sans frapper directement ces surfaces et frappant ensuite l'échantillon, caractérisé en ce que chacune des première et seconde surfaces photosensibles comprend un ensemble d'éléments photodétecteurs répartis autour de l'axe optique (78) allant de la source lumineuse aux surfaces photosensibles, des premiers conducteurs (76a-d, 83a-d) connectant chacun des éléments de la première surface photosensible (11) aux circuits et des seconds moyens conducteurs (77a-d, 85a-d) reliant chacun des éléments de la seconde surface photosensible aux circuits, les circuits déterminant, à partir des signaux de sortie des éléments photosensibles, des valeurs représentant la réflectance de l'échantillon et l'orientation axiale de l'appareil par rapport à l'échantillon.

2. Appareil selon la revendication 1, dans lequel les premiers moyens conducteurs (76a-d, 83a-d) sont connectés à un premier circuit comparateur de signaux (87) et les seconds moyens conducteurs (77a-d, 85a-d) sont connectés à un second circuit comparateur de signaux (115), les différences de quantité de lumière reçue par chaque élément étant détectées et les différences détectées dans les intensités des signaux reçus par les circuits comparateurs de signaux étant appliquées à des moyens indiquant l'orientation axiale de l'appareil par rapport à l'échantillon.

3. Appareil selon la revendication 1 ou 2, dans lequel lesdits circuits comprennent un circuit diviseur (111), dans lequel un signal délivré par l'une des surfaces photosensibles est un signal numérateur (109) et un signal délivré par l'autre surface photosensible est un signal dénominateur (107), ledit circuit diviseur délivrant ainsi un rapport résultant représentant la réflectance de l'échantillon.

4. Appareil selon l'une quelconque des revendications précédentes dans lequel lesdits éléments photosensibles comprennent des paires de photodiodes montées dos à dos et en relation de conduction thermique pour les maintenir sensiblement à la même température.

5. Appareil selon l'une quelconque des revendications précédentes agencé pour être étalonné en mesurant la lumière diffusée par un échantillon standard de composition connue et de qualité de surface connue pour créer une réflectance connue, dans lequel lesdits circuits (81-119) comprennent des moyens de commande de gain (95) pour modifier sélectivement l'amplitude du signal indicatif de réflectance, afin qu'il corresponde à la réflectance de surface connue de l'échantillon de contrôle, en sorte d'étalonner ainsi l'appareil.

**Patentansprüche**

1. Ein Instrument zur Messung des Reflexionsgrades eines Prüflings, umfassend eine Lichtquelle (1), eine erste lichtempfindliche Oberfläche (11), die mit der Lichtquelle in optischer Beziehung steht, um auftreffende Strahlen der Lichtquelle zu empfangen, eine zweite lichtempfindliche Oberfläche (24), die relativ zu der Lichtquelle angeordnet ist und in Bezug auf einen Prüfling (17) einstellbar ist, um von dem Prüfling reflektierte Strahlen zu empfangen, eine Stützvorrichtung zur Festlegung der Entfernung zwischen a) der Lichtquelle und der ersten lichtempfindlichen Oberfläche, b) der Lichtquelle und dem Prüfling und c) dem Prüfling und der zweiten lichtempfindlichen Oberfläche und ferner Schaltkreise (81-119), die so geschaltet sind, daß sie Ausgangssignale der lichtempfindlichen Oberflächen empfangen können, wobei die erste und die zweite lichtempfindliche Oberfläche nebeneinander, Rücken an Rücken in Sandwichaufbau angeordnet sind und in dem Sandwichaufbau ein Durchgang vorgesehen ist, der es ermöglicht, daß ein Teil der von der Lichtquelle ausgesandten Strahlen beide lichtempfindliche Oberflächen passiert, ohne auf sie aufzufallen und danach auf den Prüfling auftreffen, **dadurch gekennzeichnet,** daß sowohl die erste als auch die zweite lichtempfindliche Oberfläche eine Mehrzahl lichtempfindlicher Elemente umfaßt, die um die optische Achse (78), die von der Lichtquelle zu den lichtempfindlichen Oberflächen verläuft, verteilt sind, daß erste Leitungen (76a-d, 83a-d) jedes der Elemente der ersten lichtempfindlichen Oberfläche (11) mit den Schaltkreisen und daß zweite Leitungen (77a-d, 85a-d) jedes der Elemente der zweiten lichtempfindlichen Oberfläche mit den Schaltkreisen verbinden, wobei die Schaltkreise aus den Ausgangssignalen der lichtempfindlichen Elemente Werte liefern, die das Reflexionsvermögen des Prüflings und die axiale Ausrichtung des Instrumentes in Bezug auf den Prüfling repräsentieren.

2. Ein Instrument nach Anspruch 1, bei dem die ersten Leitungen (76a-d, 83a-d) mit einer ersten Signalvergleichsschaltung (87) und die zweiten Leitungen (77a-d, 85a-d) mit einer zweiten Signalvergleichsschaltung (115) verbunden sind, die Unterschiede der Lichtmenge, die von jedem Element empfangen wird, ermittelt werden und die ermittelten Unterschiede in den Signalstärken, die von den Signalvergleichsschaltungen empfangen werden, einer Vorrichtung zugeführt werden, die die axiale Ausrichtung des Instrumentes bezüglich des Prüflings anzeigt.

3. Ein Instrument nach Anspruch 1 oder 2, bei dem die Schaltkreise eine Dividierschaltung (111) umfassen, in der ein, von der einen der lichtempfindlichen Oberflächen kommendes Signal ein Zählersignal (109) und ein von der anderen lichtempfindlichen Oberfläche kommendes Signal ein Nennersignal (107) darstellt, und die Dividierschaltung einen sich daraus ergebenden Verhältniswert liefert, der dem Reflexionsvermögen des Prüflings entspricht.

4. Ein Instrument nach einem der vorhergehenden Ansprüche, bei dem die lichtempfindlichen Elemente Fotodiodenpaare umfassen, die Rücken an Rücken und in wäremleitender Beziehung angeordnet sind, um sie auf im wesentlichen der gleichen Temperatur zu halten.

5. Ein Instrument nach einem der vorhergehenden Ansprüche, das angeordnet ist, um durch Messung von Licht geeicht zu werden, das von einem Standardprüfling bekannter Zusammensetzung und Oberflächeneigenschaft gestreut wird, um ein bekanntes Reflexionsvermögen zu liefern, bei dem die Schaltkreise (81 - 119) einen Verstärkungsregler ( 95) zur selektiven Änderung der Größe eines das Reflexionsvermögen anzeigenden Signals umfassen, damit dieses dem bekannten Oberflächenreflexionsvermögen des Testprüflings entspricht, um hierdurch das Instrument eichen zu können.

FIG. 1

FIG. 2

FIG. 3